# EUROPEAN PATENT APPLICATION

(11) **EP 4 582 495 A1**
(43) Date of publication of application: **09.07.2025**
(21) Application number: 25150268.8
(22) Date of filing: 04.01.2025
(51) Int. Cl.: C09D 5/34, G01N 31/22, C09B 1/16, C09D 4/00, C09D 7/41

(54) **METHOD OF PRODUCING A SINGLE-COMPONENT PUTTY AND METHOD OF CONTROLLING THE HARDENING OF A SINGLE-COMPONENT PUTTY COATING**

(30) Priority: 08.01.2024 PL 44747724
(71) Applicant: NOVOL Sp. z o.o., 62-052 Komorniki (PL)
(72) Inventor: Wiatrowski, Marcin, 61-680 Poznan (PL); Rosicki, Krzysztof, 62-030 Lubon (PL)
(74) Representative: Gornicki, Pawel

(57) **Abstract**

A method for producing a single-component putty comprising a putty mass and photoinitiators is characterized by the incorporation of 1,4-(α-isopropylamino)anthraquinone (C₂₂H₂₂NR₂O₂) as a blue pigment. The pigment, which interacts with the photoinitiators upon exposure to UV radiation, is added in a concentration ranging from 0.005% to 0.1% by weight relative to the putty mass. The constituents are thoroughly mixed until a homogeneous mixture exhibiting the desired colour is obtained.

The method for controlling the hardening of a single-component putty coating produced according to claim 1 is characterized by exposing the coating to UV radiation until it returns to an initial colour matching that specified on the packaging and in the technical data sheet.

## Description

The present invention provides methods for producing a single-component putty and controlling the hardening of coatings made therefrom.

Single-component putty is primarily used for vehicle body repair in automotive repair shops. It is designed to fill voids and level the surfaces of repaired components.

These putties consist of a putty mass incorporating photoinitiators that trigger the polymerization process. The putty is applied to the levelled surface and subsequently exposed to UV light of the appropriate wavelength. The quality of the applied layer depends on uniform exposure to UV light of specific power and wavelength, as well as the appropriate exposure time. The quality of subsequent processing of the repaired surface depends on the proper curing of the coating.

With common single-component putties, it is impossible to determine when the coating is fully hardened after exposure. To ensure full hardening of the coating, the exposure time is often extended.

The objective is to develop a putty composition that facilitates assessment of both the uniformity and correctness of the curing of a coating applied to a repaired surface using a UV lamp.

A method for producing a single-component putty comprising a putty mass and photoinitiators is characterized by the incorporation of 1,4-(a-isopropylamino) anthraquinone (C₂₂H₂₂NR₂O₂) as a blue pigment. The pigment, which interacts with the photoinitiators upon exposure to UV radiation, is added in a concentration ranging from 0.005% to 0.1% by weight relative to the putty mass. The constituents are thoroughly mixed until a homogeneous mixture exhibiting the desired colour is obtained.

The method for controlling the hardening of a single-component putty coating produced according to the invention is characterized by exposing the coating to UV radiation until it returns to an initial colour matching that specified on the packaging and in the technical data sheet, indicating complete hardening.

The present invention provides a more efficient curing process by reducing the UV exposure time required for the applied coating without compromising quality. The practical importance of this solution is highlighted by the widespread application of single-component putties in automotive repair.

The pigmented putty achieves the intended colour specified on the packaging and in the product's technical data sheet.

The pigmented putty is packaged and distributed to end users.

The putty is dispensed from the packaging and applied directly to the surface to be repaired. The applied layer of putty is then exposed to UV radiation. During UV exposure, the pigment chemically reacts with the photoinitiators to form an unstable blue complex that decomposes, causing the putty to gradually lose its colour and return to its original shade.

A homogeneous colour change observed during UV light exposure is indicative of proper and complete curing of the coating. A complete change in the colour of the applied putty layer indicates that the polymerisation reaction has completed and the putty is now hardened allowing subsequent repair work.

In contrast to known single-component putties cured with UV lamps, the present invention facilitates visual assessment of uniform curing based on observation of the colour transition. The quality of the applied putty layer is highly dependent on proper exposure to UV radiation.

The present invention eliminates the problem of localised under-curing and its resulting negative effects in applied coatings.

The invention is illustrated by the following embodiment.

Between 0.005 g and 0.1 g of 1,4-(a-isopropylamino) anthraquinone (C₂₂H₂₂NR₂O₂), commercially available as Blue Pour Thermoplastic A, is added to 100 g of epoxy-acrylic resin putty. The mixture is then blended until a uniform colour is achieved. The resulting colour of the mixture corresponds to the colour specified on the packaging and in the product data sheet.

The putty thus obtained is applied to the surface requiring repair. The resultant coating is subjected to UV radiation until its colour approximates the initial colour detailed on the packaging and in the accompanying product data sheet

The completion of polymerization and hardening of the applied coating is indicated by complete discolouration.

## Claims

1. A method for producing a single-component putty comprising a putty mass and photoinitiators is **characterized by** the incorporation of 1,4-(α-isopropylamino)anthraquinone (C₂₂H₂₂NR₂O₂) as a blue pigment. The pigment, which interacts with the photoinitiators upon exposure to UV radiation, is added in a concentration ranging from 0.005% to 0.1% by weight relative to the putty mass. The constituents are thoroughly mixed until a homogeneous mixture exhibiting the desired colour is obtained.

2. The method for controlling the hardening of a single-component putty coating produced according to claim 1 **characterized by** exposing the coating to UV radiation until it returns to an initial colour matching that specified on the packaging and in the technical data sheet, indicating complete hardening.
